# EUROPÄISCHE PATENTSCHRIFT

(11) **EP 2 245 093 B1**
(45) Veröffentlichungstag und Bekanntmachung des Hinweises auf die Patenterteilung: **31.08.2011**
(21) Anmeldenummer: 09714226.9
(22) Anmeldetag: 24.02.2009
(51) Int. Cl.: C08L 83/04, C08K 3/34

(54) **KONDENSATIONSVERNETZENDE SILIKONSCHÄUME**
CONDENSATION CROSS-LINKING SILICON FOAMS
MOUSSES SILICONES À RÉTICULATION PAR CONDENSATION

(30) Priorität: 29.02.2008 DE 102008011986
(43) Veröffentlichungstag der Anmeldung: 03.11.2010
(73) Patentinhaber: Sonderhoff Chemicals GmbH, 50829 Köln (DE)
(72) Erfinder: MORHENN, Stephan, 47829 Krefeld (DE); LINK, Alfred, 50259 Pulheim (DE)
(74) Vertreter: Althaus, Arndt
(86) Internationale Anmeldenummer: PCT/EP2009/001297
(87) Internationale Veröffentlichungsnummer: WO 2009/106289

(56) Entgegenhaltungen:
- JP-A- 63 043 934

## Beschreibung

Gegenstand der Erfindung sind Verfahren, Reaktionsgemische und Zweikomponentensysteme zur Herstellung von Silikonschaum, bei denen in einer ersten Reaktion von Verbindungen mit mindestens einer Si-H-Gruppe in Gegenwart eines basischen Katalysators Wasserstoff freigesetzt wird und in einer zweiten Reaktion das Reaktionsgemisch in Gegenwart eines Metallkatalysators vernetzt wird.

Der Einsatz von Silikonschäumen als Dicht- und Klebstoffe ist nach dem Stand der Technik bekannt. Silikonschäume werden von zahlreichen Anbietern für verschiedene Applikationen bereitgestellt. Bei kommerziell erhältlichen Schäumen erfolgt die Vernetzung zumeist durch eine Additionsreaktion. Solche Produkte werden beispielsweise von den Firmen Sonderhoff, Wacker (Silikonkautschuk Elastosil (TM) oder Dow Chemical angeboten. Entsprechende Schäume werden beispielsweise in den EP 0691365 B1 und WO 00/46282 beschrieben.

Diese Schäume weisen den Nachteil auf, dass die Rohstoffe vergleichsweise teuer sind. Außerdem sind additionsvernetzende Schäume aufgrund der eingesetzten Katalysatoren störanfällig. Insbesondere bei Applikationen, die in Gegenwart von Schwefel (Gummi), Aminen, Schwermetallen etc. stattfinden, tritt das Problem der Katalysatorvergiftung auf. Die Silikonschäume reagieren dabei nur teilweise oder gar nicht aus, das Verfahren ist daher in solchen Anwendungen nicht prozessfähig.

Ein weiterer Nachteil der bekannten additionsvernetzenden Schäume ist, dass diese zum Aushärten in der Regel erhitzt werden müssen, beispielsweise in einem Trockenofen. Dies erfordert einerseits einen hohen Energieaufwand, zum anderen können wärmeempfindliche oder schwer zugängliche und sperrige Gegenstände oft nicht mit einem Trockenofen behandelt werden.

Es wurde daher versucht, Silikonschäume bereitzustellen, bei denen die Vernetzung durch eine Kondensationsreaktion erfolgt. Solche Schäume werden z.B. von der Fa. Compact Technologies hergestellt. Sie weisen jedoch den Nachteil auf, dass bei der Reaktion Essigsäure freigesetzt wird. Diese Schäume sind daher nicht oder nur wenig geeignet für das Beschäumen von korrosions-empfindlichen Gegenständen, beispielsweise elektronischen oder elektrischen Bauteilen, metallischen Substraten, Spiegeln oder Reflektoren.

Das US Patent US 2,833,732 offenbart Verfahren zur Herstellung von Schäumen, die auf Siloxanharzen basieren. Die Schäume werden durch Erhitzen eines Reaktionsgemischs erzeugt.

Die EP 0 915 128 A1 betrifft Silikonschaummassen, die durch eine Polykondensationreaktion erzeugt werden. Zum Aufschäumen dienen im Wesentlichen zugesetzte physikalische Treibmittel.

Das japanische Patent JP 63-43934 offenbart Silikonschäume, die ein Guanidiniumsilan oder Guanidiniumsiloxan, Verbindungen mit einer Si-H Gruppe sowie Diorganopolysiloxane mit endständigen Hydroxygruppen enthalten. Bei der Reaktion kondensieren die Si-H-Gruppen mit den Hydroxylgruppen des Diorganopolysiloxans und setzen dabei Wasserstoff frei, der das Gemisch aufschäumt. Die Reaktion führt daher zu einer gekoppelten Vernetzungs- und Gasbildungsreaktion. Beider Reaktionen verlaufen nicht voneinander unabhängig. Es wird mit der Guanidiniumverbindung nur ein einziger Katalysator eingesetzt, der ein industrieunübliches Spezialreagenz darstellt, zu dem kaum Auswahlmöglichkeiten bestehen und der beide Reaktionen gleichzeitig beschleunigt. Die beiden Reaktionen (Gasbildung und Vernetzung) sind daher nicht getrennt voneinander steuerbar, was aber in vergleichbaren Reaktivsystemen zur Anpassung des Reaktionsverlaufs an die Anforderungen eines gegebenen Anwendungsfalles unerlässlich ist. Die Steuerungsmöglichkeiten dieser Verfahren und Endprodukte sind daher sehr begrenzt.

Der vorliegenden Erfindung liegt die Aufgabe zugrunde, Reaktionsgemische, Silikonschäume und Verfahren zu deren Anwendung bereitzustellen, die die oben beschriebenen Nachteile überwinden. Die Verfahren sollen insbesondere auf einfache Weise und effizient einsetzbar sein und eine Vielzahl von Anwendungen ermöglichen. Die Silikonschäume sollen dabei eine gute Haftung auf verschiedenen Materialien, insbesondere Metallen, aufweisen.

Das der Erfindung zugrunde liegende Problem wird überraschenderweise gelöst durch Verfahren, Reaktionsgemische, zweikomponentensysteme, Silikonschäume und Verwendungen gemäß den Ansprüchen 1 bis 24.

Gegenstand der Erfindung sind ein Verfahren und ein Reaktionsgemisch zur Herstellung von Silikonschaum, wobei ein Reaktionsgemisch eingesetzt wird, in dem bei einer ersten Reaktion von Verbindungen mit mindestens einer Si-H-Gruppe in Gegenwart eines basischen Katalysators molekularer Wasserstoff freigesetzt wird und in einer zweiten Reaktion das Reaktionsgemisch vernetzt wird. Die zweite Reaktion wird dabei von einem zweiten Katalysator, der ein Metall, eine Metallverbindung oder eine Organometallverbindung ist, katalysiert ("Metallkatalysator").

Die zweite Reaktion erfolgt vorzugsweise zwischen einem Polysiloxan a) mit mindestens zwei Si-OH-Gruppen und einer Verbindung b) mit mindestens zwei Si-O-C - Gruppen.

Ein erfindungsgemäßes Reaktionsgemisch enthält vorzugsweise
a) ein Polysiloxan mit mindestens zwei Si-OH Gruppen,
b) eine Verbindung mit mindestens zwei Si-O-C - Gruppen,
c) einen Metallkatalysator, ausgewählt aus der Gruppe bestehend aus Metallen, Metallverbindungen oder Organometallverbindungen;
d) eine Verbindung mit mindestens einer Si-H Gruppe.

Das Reaktionsgemisch enthält zusätzlich einen basischen Katalysator, der entweder ein gesonderter Katalysator e) ist oder mit der Verbindung b) identisch ist. In diesem Fall weist die Verbindung b) eine entsprechende katalytisch wirkende funktionelle Gruppe auf.

Bei dem erfindungsgemäßen Verfahren wird Wasserstoff freigesetzt, der die Aufschäumung des Reaktionsgemischs bewirkt. Der Zusatz eines weiteren Treibgases, wie Pentan, ist also nicht erforderlich. Bevorzugt wird kein weiteres Treibgas zugesetzt.

Das erfindungsgemäße Reaktionsgemisch ermöglicht die Durchführung von zwei Reaktionen, die im Wesentlichen unabhängig voneinander verlaufen. Eine Reaktion ist die Gasfreisetzungsreaktion, bei der Wasserstoff entsteht und das Gemisch aufgeschäumt wird. Die zweite Reaktion ist die Vernetzungsreaktion, die zur Verfestigung des Reaktionsgemisches führt. Die Reaktionen sind "unabhängig voneinander", weil die jeweiligen Ausgangsstoffe und die Katalysatoren im Wesentlichen jeweils unabhängig voneinander ausgewählt werden können und auf diese Weise je nach den Erfordernissen die Reaktionsgeschwindigkeiten und Reaktionsverläufe jeder der beiden Reaktionen eingestellt werden können. Dem steht nicht entgegen, dass Si-OH Verbindungen, die bei der ersten Reaktion entstehen, auch anschließend vernetzt werden können. Entscheidend ist vielmehr, dass der Fachmann beide Reaktionen im Wesentlichen unabhängig voneinander steuern kann. Das System unterscheidet sich dadurch von dem System aus JP63-43934, bei dem der Wasserstoff bei der Vernetzungsreaktion in einer einzigen Reaktion entsteht.

Das erfindungsgemäße Verfahren und das Reaktionsgemisch weisen die Besonderheit auf, dass bei einer ersten Reaktion Wasserstoff freigesetzt wird und in bei einer zweiten Reaktion das Reaktionsgemisch vernetzt wird. In einer bevorzugten Ausführungsform setzt die zweite Reaktion mit zeitlicher Verzögerung nach der ersten Reaktion ein. "Zeitlich verzögert" bedeutet dabei, dass das Reaktionsgemisch so eingestellt ist, dass es zunächst aufgeschäumt wird und anschließend die Vernetzung erfolgt. "Zeitlich verzögert" bedeutet im Rahmen dieser Erfindung dabei nicht zwangsläufig, dass die zweite Reaktion erst einsetzt, wenn die erste Reaktion vollständig abgeschlossen ist. Beide Reaktionen gehen vielmehr ineinander über. Dies kann beispielsweise bedeuten, dass die zweite Reaktion erst zu weniger als 10, 20 oder 40% abgeschlossen ist, wenn die erste Reaktion bereits zu 50% abgeschlossen ist.

Bei der ersten Reaktion, der Gasfreisetzungsreaktion, setzen die Verbindungen d), die Si-H-Gruppen enthalten, Wasserstoff frei. Es findet also als Hauptreaktion nicht eine Vernetzung der Si-H-Gruppen enthaltenden Verbindungen mit weiteren Bestandteilen des Reaktionsgemisches statt. Dies hat den Vorteil, dass zunächst das Aufschäumen des Reaktionsgemischs erfolgt, ohne bereits durch eine gleichzeitige Vernetzung beeinträchtigt zu werden.

Diese erste Reaktion wird durch Basen katalysiert. Das Reaktionsgemisch enthält daher mindestens eine basische Komponente. Dieser basische Katalysator ist so ausgewählt, dass er die erste Reaktion ermöglicht oder beschleunigt. Die basische Komponente ist in einer Ausführungsform ein gesonderter basischer Katalysator e). In einer anderen Ausführungsform der Erfindung dient die Komponente b) als basischer Katalysator. Bevorzugt enthält die Verbindung b) dann eine oder mehrere Aminogruppen, die primäre, sekundäre oder tertiäre Aminogruppen sein können.

Die erste Reaktion kann unterstützt werden, indem dem Reaktionsgemisch ein Wasserstoffdonator f) zugesetzt wird. Als Wasserstoffdonator wird erfindungsgemäß eine Verbindung bezeichnet, die unter den Reaktionsbedingungen die Bildung von molekularem Wasserstoff mit der Verbindung d) unterstützt oder ermöglicht. Geeignete Wasserstoffdonatoren sind beispielsweise Wasser, ein- oder mehrwertige Alkohole wie Methanol, Ethanol, Propanol, Butanol, Glycol, Glycerin, oder Amine, insbesondere primäre oder sekundäre Amine. Der Wasserstoffdonator wird bevorzugt in einer Menge von <10, <5 oder <2 Gew.-%, besonders bevorzugt zwischen 0,2 und 5 Gew.-% zugesetzt. Die Zugabe eines Wasserstoffdonators ist jedoch nicht zwingend erforderlich. So kann auch eine der enthaltenen Komponenten des Reaktionsgemischs diese Funktion übernimmt (beispielsweise ein Amin), oder geringe Mengen an Feuchtigkeit aus der Umgebung reichen bereits aus, um eine Menge an Wasserstoff freizusetzen, die das Aufschäumen ermöglicht.

Die zweite Reaktion ist eine Vernetzungsreaktion, vorzugsweise eine Kondensationsreaktion. Das Verfahren unterscheidet sich somit von den bekannten Verfahren, bei denen die Vernetzung von Silikonschäumen im Wesentlichen durch eine Additionsreaktion erfolgt. Es ist erfindungsgemäß nicht erforderlich, dass das Reaktionsgemisch ungesättigte Kohlenstoffverbindungen enthält, die additionsvernetzbar sind. In einer bevorzugten Ausführungsform enthält das Reaktionsgemisch keine ungesättigten Kohlenstoffverbindungen. Die Erfindung kann jedoch in einer besonderen Ausführungsform so durchgeführt werden, dass zusätzlich zu der Kondensationsreaktion auch eine Additionsreaktion stattfindet.

Bei der Kondensationsreaktion reagiert das Polysiloxan a) mit der Verbindung b). Dabei werden die Verbindungen a) und b) kovalent verbunden, so dass eine chemische Kondensation und Vernetzung eintritt. Die bei der Gasreaktion entstehenden Reaktionsprodukte können an der Vernetzungsreaktion ebenfalls teilnehmen. Sie reagieren dabei jedoch vorzugsweise nicht signifikant schneller ab als die Reaktanden der Hauptvernetzungsreaktionen.

Die Kondensationsreaktion wird durch den Metallkatalysator c), der ein Metall, eine Metallverbindung oder eine Organometallverbindung ist, katalysiert. Geeignete Katalysatoren sind beispielsweise Titan, Zinn, Zink, besonders bevorzugt Dibutylzinndilaurat (DBTDL). Die Menge und die Art des Katalysators c) werden so eingestellt, dass die Vernetzungsreaktion nach einer gewünschten Zeit im Wesentlichen abgeschlossen ist.

In besonderen Ausführungsformen der Erfindung sind die einzelnen Komponenten a) bis e) wie folgt ausgebildet:
Die Polysiloxane a) mit mindestens zwei Si-OH Gruppe werden auch als Silanole bezeichnet. In einer bevorzugten Ausführungsformen der Erfindung ist das Polysiloxan a) ein bihydroxy-funktionelles Polydialkyloder arylsiloxan, beispielsweise ein bihydroxy-funktionelles Polydimethylsiloxan oder bihydroxy-funktionelles Polydiethylsiloxan. Die Verbindung a) dient im erfindungsgemäßen Reaktionsgemisch als Basispolymer bei der Vernetzungsreaktion.
Die Verbindungen b) reagieren bei der Kondensationsreaktion als Vernetzer. Sie weisen mindestens zwei Si-O-C Struktureinheiten auf, so dass die Verbindung b) beispielsweise ein Bis-Alkoxysilan ist. Der Begriff "Silan" bezeichnet im Rahmen der Erfindung nicht nur Verbindungen, die ausschließlich aus Silizium und Wasserstoff bestehen. Im Rahmen der Erfindung steht "Silan" allgemein für Verbindungen, bei denen das Siliciumatom mit organischen Resten und mindestens zwei der beschriebenen Struktureinheiten verbunden ist.

In einer bevorzugten Ausführungsform weist die Verbindung b) mit den mindestens zwei Si-O-C-Gruppe die Formel RR'Si(-O-R¹)(-O-R²), RSi(-O-R¹)(-O-R²)(-O-R³) oder Si(-O-R¹)(-O-R²)(-O-R³)(-O-R⁴) auf, wobei R¹, R², R³, R⁴, R und R' ein organischer Rest ist. In bevorzugten Ausführungsformen der Erfindung sind dabei die organischen Reste R¹, R², R³, R⁴, R und R' ausgewählt aus der Gruppe bestehend aus Alkyl-, substituierten Alkyl-, Aryl-, Alkaryl- und Ararylresten.

Besonders bevorzugt ist es, wenn die Si-Atome mit Alkoxygruppen, wie Methoxy- oder Ethoxygruppen, verbunden sind.

Bevorzugt handelt es sich bei den Verbindungen b) um Vinyltrimethoxysilan (VTMO) oder 3-Aminopropyltriethoxysilan (AMEO) handelt, die auch in Kombination eingesetzt werden können. Wie oben erörtert kann es sich bei der Verbindung b) um eine bifunktionelle Verbindung handeln, die gleichzeitig die Funktion des basischen Katalysators erfüllt. In diesem Falle weist die Verbindung b) eine basische Gruppe auf, beispielsweise eine Aminogruppe. Solche Verbindungen wie AMEO werden auch als Aminosilane bezeichnet.

Allgemein sind die Verbindungen a) und b) so auszuwählen, dass eine Vernetzung erfolgt.

In einer bevorzugten Ausführungsform der Erfindung ist die Verbindung d) ein Si-H funktionelles Polysiloxan mit geringer Kettenlänge und einem hohen Si-H-Anteil.

Der Katalysator e) ist bevorzugt ausgewählt aus der Gruppe bestehend aus Aminverbindungen, Metallhydroxiden und anderen Lewis-Basen. In einer bevorzugten Ausführungsform der Erfindung ist die Verbindung b) mit einer oder mehreren Aminogruppen substituiert und dient als basischer Katalysator. Besonders bevorzugt sind Aminoalkyltrialkoxysilane, beispielsweise Aminoalkyltriethoxysilane, wie Aminopropyltriethoxysilan.

In bevorzugten Ausführungsformen der Erfindung enthält das Reaktionsgemisch Zusatzstoffe ausgewählt aus der Gruppe bestehend aus
f) Wasserstoffdonatoren
g) Weichmachern
h) Schaumstabilisatoren
i) Füllstoffen und
j) sonstigen Zusatzmitteln wie Trockenmittel, Farbstoffe, Pigmente oder sonstige funktionelle Zusatzstoffe.

In einer besonders bevorzugten Ausführungsform enthält das Reaktionsgemisch Wasser. Bevorzugt ist ein Anteil von bis zu 10% oder bis zu 5%, insbesondere 0,2 bis 3%. Das Wasser unterstützt die erste Reaktion, bei der die Freisetzung des Wasserstoffs erfolgt.

Als Weichmacher sind beispielsweise mono-hydroxy- oder nicht funktionelle Silikonöle oder andere Öle wie Paraffinöl geeignet, wie für Silikone bekannt.

Als Schaumstabilisatoren können bekannte Mittel wie Tenside oder Copolymere, wie für andere Schaumprodukte üblich, eingesetzt werden.

Als Füllstoffe können bekannte Mittel wie hochdisperse Kieselsäure, Alumosilikate, Magnesiasilikate, Carbonate wie Kreide oder Kaolin eingesetzt werden. Nanofüllstoffe können ebenfalls eingesetzt werden Die Schäume können beliebige weitere Zusatzstoffe enthalten, die nach dem Stand der Technik bekannt sind, wie z.B. Farbstoffe, Pigmente, Thermostabilisatoren, Antioxidantien oder Brandschutzadditive.

In einer bevorzugten Ausführungsform der Erfindung weist das erfindungsgemäße Reaktionsgemisch folgende Anteile der Komponenten in Gewichts-% auf:
20-95 % Polysiloxan a),
0,5 bis 20% Verbindung b),
0,05 bis 2% Metallkatalysator c),
0,1 bis 5 % Verbindung d),
0,05 bis 10% basischer Katalysator e),
0 bis 20% Wasserstoffdonator f)
0 bis 80% Füllstoffe i) und
0 bis 50% sonstige Zusatzstoffe j).

Ein weiterer Gegenstand der Erfindung ist ein Zweikomponentensystem zur Herstellung von Silikonschaum, umfassend eine Komponente A, enthaltend
a) ein Polysiloxan mit mindestens zwei Si-OH Gruppen,
d) eine Verbindung mit mindestens einer Si-H Gruppe,
und eine Komponente B, enthaltend
b) eine Verbindung mit mindestens zwei Si-O-C Gruppen,
c) einen Metallkatalysator, ausgewählt aus der Gruppe bestehend aus Metallen, Metallverbindungen und Organometallverbindungen.

Die Komponente B enthält vorzugsweise einen basischen Katalysator, der gleichzeitig die Verbindung b) ist und/oder ein zusätzlicher Katalysator e) ist.

Ein Wasserstoffdonator f) kann in der Komponente A oder B eingesetzt werden. Sofern Amine eingesetzt werden, so sind diese bevorzugt in der Komponente B enthalten.

Die Reaktion wird in einer bevorzugten Ausführungsform initiiert durch Mischen einer Komponente A, enthaltend das Polysiloxan a) und die Verbindung d) und ggf. f), mit einer Komponente B, enthaltend die Verbindung b) und den Metallkatalysator c).

Das Verhältnis der Komponenten A zu B in Gewichts% liegt in bevorzugten Ausführungsformen zwischen 99:1 und 1:99, besonders bevorzugt zwischen 98:2 und 75:25.

Das erfindungsgemäße Reaktionsgemisch oder Zweikomponentensystem kann per Hand oder in nach dem Stand der Technik bekannten Austragungs- und Dosiervorrichtungen verarbeitet werden. Dabei kann es sich um Schlauchbeutel, Kartuschen und vergleichbare Vorrichtungen für den manuellen Gebrauch handeln oder um maschinelle Dosier- und Mischvorrichtungen für den industriellen Gebrauch.

Gegenstand der Erfindung ist auch ein Verfahren zur Verbindung oder zum Ausschäumen oder Beschäumen eines Gegenstandes, insbesondere einer Gehäusedichtnut oder eines Elektronikbauteils, wobei an der Oberfläche des Gegenstandes gemäß einem erfindungsgemäßen Verfahren ein Silikonschaum hergestellt wird.

Gegenstand der Erfindung ist auch ein Silikonschaum, der gemäß einem erfindungsgemäßen Verfahren erhältlich ist, ein Gegenstand, der mit einem erfindungsgemäßen Silikonschaum verbunden wurde, oder ein Formkörper, bestehend aus dem erfindungsgemäßen Silikonschaum.

Allgemein sind Verfahren Gegenstand der Erfindung, bei denen die erfindungsgemäßen Reaktionsgemische oder Zweikomponentensysteme eingesetzt werden.

Grundsätzlich eignen sich die erfindungsgemäßen Silikonschäume für alle Anwendungen, für die auch nach dem Stand der Technik bekannte Silikonschäume verwendet werden. Sie können beispielsweise zum Ausschäumen von Hohlräumen, zum Abdichten und zum Verbinden und Kleben von Bauteilen verwendet werden. Es können jedoch auch Formkörper aus den Schäumen hergestellt werden, wie Dichtungen.

Gegenstand der Erfindung ist auch die Verwendung des erfindungsgemäßen Verfahrens bei der Herstellung von Elektronikbauteilen, von Leuchten oder Lampen und/oder zur Auftragung von Schaum auf Metalle. Bei Elektronikanwendungen ist ein besonderer Vorteil, dass Leiterbahnen aus Buntmetallen nicht korrodieren, da keine aggressiven Spaltprodukte entstehen. In der Lampenindustrie können mit Metall bedampfte Reflektoren mit Schaum behandelt werden, ohne dass es zu einem "Erblinden" wegen korrosiver Spaltprodukte kommt. Allgemein werden Metalle nicht korrosiv beeinträchtigt.

Die Eigenschaften der erfindungsgemäßen Schäume lassen sich auf einfache Weise durch die Auswahl der Komponenten regulieren. Sie variieren je nach Kettenlänge des OH-funktionellen Polydialkylsiloxans, der Art und Konzentration der Füllstoffe und der Menge der Bestandteile, die das Treibmittel freisetzen. Darüber hinaus können über fast alle Mengenverhältnisse der einzelnen Bestandteile oder auch der Komponenten A und B die Schaumeigenschaften beeinflusst werden, und die Gasbildungsreaktion lässt sich weitgehend unabhängig von der Vernetzungsreaktion steuern. So können Schäume erzeugt werden, die eine Härte von 10 Shore 00 bis 60 Shore A aufweisen. und die in hohem Maße mehr oder wenig porös sind.

Die erfindungsgemäßen Verfahren, Reaktionsgemische und Schäume unterscheiden sich deutlich von den nach dem Stand der Technik bekannten. So nutzt keines der bekannten Verfahren eine zweistufige Reaktion, bei der zunächst Wasserstoff freigesetzt wird, ohne dass eine signifikante Vernetzung eintritt, und wo zeitlich verzögert eine Kondensationspolymerisation einsetzt. Die bekannten Verfahren nutzen Reaktionsgemische, bei denen entweder die Verfestigung durch Polyaddition erfolgt und der Wasserstoff während der Verfestigung freigesetzt wird, oder gänzlich andere Systeme.

Im Unterschied zu dem in US 2,833,732 beschriebenen Verfahren ist ein Erhitzen der erfindungsgemäßen Reaktionsgemische nicht erforderlich. In einer bevorzugten Ausführungsform wird die Reaktion bei Raumtemperatur oder unterhalb 30 oder 40°C durchgeführt.

Bei der JP 45-12675 entsteht der Wasserstoff bei der Vernetzung eines Organohydrodiensiloxans mit einem Diorganopolysiloxan mit endständigen Hydroxygruppen. Vernetzung und Wasserstofferzeugung erfolgen also nicht in unterschiedlichen, zeitlich versetzten Reaktionen. Zusätzlich wird zwingend eine Guanidiniumsilan oder Guanidinium-Siloxanverbindung eingesetzt. Bei der vorliegenden Erfindung wird in einer bevorzugten Ausführungsform keine Guanidiniumsilan oder Guanidiniumsiloxanverbindung eingesetzt.

Die erfindungsgemäßen Silikonschäume weisen gegenüber bekannten Systemen zahlreiche Vorteile auf. So sind sie auf einfache Weise und kostengünstig herstellbar.

Die Vernetzung erfolgt ohne Wärmebehandlung und die erhaltenen Schäume sind hochstabil.

Die erfindungsgemäßen Reaktionsgemische und Komponenten A und B sind während der Verarbeitung chemisch deutlich unempfindlicher als additionsvernetzende Systeme, da sie nicht deren empfindliche Katalysatoren enthalten. So besteht bei den Schwermetallkatalysatoren der additionsvernetzenden Systeme (meist PT-Katalysatoren) die Gefahr einer Katalysatorvergiftung durch aminische Stoffe, Schwefel oder bestimmte Metallverbindungen.

Auch kann durch die erfindungsgemäßen Schäume eine ausgezeichnete Haftung auf verschiedenen Substraten, unter anderem Metallen, erzielt werden.

### Ausführungsbeispiele:

### Beispiel 1

| Komponente A (95,2 %): | |
|---|---|
| 86,5% | Polydimethylsiloxan mit endständigen Silanolgruppen, z.B. Silopren C (500 -100000 m Pa*s) |
| 12% | hochdisperse Kieselsäure (Degussa R812) |
| 1,5% | Si-H-funktionelles Polysiloxan (z.B. Baysilone-Öl MH 15) |

| Komponente B (4,8%): | |
|---|---|
| 40% | Vinyltrimethoxysilan (z.B. Dynasylan Si 108, Degussa) |
| 55% | 3-Aminopropyltriethoxysilan (GF91, Wacker) |
| 5% | Dibutylzinndilaurat (DBTDL) |

### Beispiel 2:

| Komponente A (90,9%): | |
|---|---|
| 75% | OH-Polymer (500-100000 m Pa*s) |
| 22,5% | hochdisperse Kieselsäure (HDK 2000 Wacker) |
| 1% | Schaumstabilisator (Glycerin techn.) |
| 1,5% | Si-H-funktionelles Polysiloxan (z.B. Baysilone-Öl MH 15) |

**Komponente B (9,1%):**

| | |
|---|---|
| 20% | Vinyltrimethoxysilan (VTMO) |
| 30% | 3-Aminopropyltriethoxysilan (GF91, Wacker) |
| 5% | Dibutylzinndilaurat (DBTDL) |
| 45% | Weichmacher (Paraffinöl / Baysilone S-Öl) |

### Beispiel 3

| Komponente A (95,2 %): | |
|---|---|
| 86,5% | OH-Polymer (500-100000 m Pa*s) |
| 12% | hochdisperse Kieselsäure (Degussa R812) |
| 1,5% | Si-H-funktionelles Polysiloxan (z.B. Baysilone-Öl MH 15) |

| Komponente B (4,8%): | |
|---|---|
| 72% | Oximsilan |
| 3% | Wasser |
| 5% | Dibutylzinndilaurat (DBTDL) |
| 20% | Ammoniumbicarbonat |

### Beispiel 4:

| Komponente A (95,2%): | |
|---|---|
| 86,5% | OH-Polymer (500-100000 mPas) |
| 12% | hochdisperse Kieselsäure (R812 Degussa) |
| 1,5% | Si-H-funktionelles Polysiloxan (z.B. Baysilone-Öl MH 15) |

| Komponente B (4,8%) | |
|---|---|
| 40% | Vinyltrimethoxysilan (Sil08 Degussa) |
| 55% | 3-Aminopropyltriethoxysilan (Dynasylan^{®} AMEO, Degussa) |
| 5% | Dibutylzinnlaureat (DBTDL) |

### Beispiel 5

| Komponente A (95,2 %): | |
|---|---|
| 86,5% | OH-Polymer (500-100000 m Pa*s) |
| 12% | hochdisperse Kieselsäure (Degussa R812) |
| 1,5% | Si-H-funktionelles Polysiloxan (z.B. Baysilone-Öl MH 15) |

**Komponente B (4,8%):**

| | |
|---|---|
| 40% | Phenyltrimethoxysilan (Dynasylan 9165) |
| 5% | Dibutylzinndilaurat (DBTDL) |
| 55% | 3-Aminopropyltriethoxysilan (Dynasylan^{®} AMEO, Degussa) |

## Patentansprüche

1. Verfahren zur Herstellung von Silikonschaum, wobei ein Reaktionsgemisch eingesetzt wird, in dem bei einer ersten Reaktion von Verbindungen mit mindestens einer Si-H-Gruppe in Gegenwart eines basischen Katalysators Wasserstoff freigesetzt wird und in einer zweiten Reaktion das Reaktionsgemisch in Gegenwart eines Metallkatalysators vernetzt wird.

2. Verfahren nach Anspruch 1, **dadurch gekennzeichnet, dass** die zweite Reaktion eine Kondensationsreaktion ist.

3. Verfahren nach Anspruch 1 oder 2, **dadurch gekennzeichnet, dass** die erste Reaktion und die zweite Reaktion im Wesentlichen unabhängig voneinander verlaufen.

4. Verfahren nach einem der Ansprüche 1 bis 3, **dadurch gekennzeichnet, dass** die zweite Reaktion mit zeitlicher Verzögerung nach der ersten Reaktion verläuft.

5. Verfahren nach einem der Ansprüche 1 bis 4, **dadurch gekennzeichnet, dass** die zweite Reaktion zwischen einem Polysiloxan a) mit mindestens zwei Si-OH-Gruppen und einer Verbindung b) mit mindestens zwei Si-O-C Gruppen erfolgt.

6. Reaktionsgemisch zur Herstellung von Silikonschaum, enthaltend
a) ein Polysiloxan mit mindestens zwei Si-OH Gruppen,
b) eine Verbindung mit mindestens zwei Si-O-C Gruppen,
c) einen Metallkatalysator, ausgewählt aus der Gruppe bestehend aus Metallen, Metallverbindungen und Organometallverbindungen,
d) eine Verbindung mit mindestens einer Si-H Gruppe,
e) einen basischen Katalysator, der entweder identisch mit der Verbindungen b) ist oder ein gesonderter Katalysator ist.

7. Reaktionsgemisch nach Anspruch 6, **dadurch gekennzeichnet, dass** es Wasserstoff freisetzt, der die Aufschäumung des Reaktionsgemischs bewirkt.

8. Reaktionsgemisch nach Anspruch 6 oder 7, **dadurch gekennzeichnet, dass** das Polysiloxan a) ein Polydialkylsiloxan ist.

9. Reaktionsgemisch nach einem der Ansprüche 6 bis 8, **dadurch gekennzeichnet, dass** die Verbindung b) mit den mindestens zwei Si-O-C Gruppen die Formel RR' Si(-O-R¹)(-O-R²), RSi (-O-R¹)(-O-R²)(-O-R³) oder Si(-O-R¹)(-O-R²)(-O-R³)(-O-R⁴) aufweist, wobei R¹, R², R³, R⁴, R und R' ein organischer Rest ist.

10. Reaktionsgemisch nach Anspruch 9, **dadurch gekennzeichnet, dass** bei der Verbindung b) die organischen Reste R¹, R², R³, R⁴, R und R' ausgewählt sind aus der Gruppe bestehend aus Alkyl-, substituiertem Alkyl-, Aryl-, Alkaryl- und Ararylresten.

11. Reaktionsgemisch nach einem der Ansprüche 6 bis 10, **dadurch gekennzeichnet, dass** der Metallkatalysator c) eine zinnorganische Verbindung ist.

12. Reaktionsgemisch nach Anspruch 11, **dadurch gekennzeichnet, dass** die zinnorganische Verbindung Dibutylzinndilaurat (DBTDL), Zinnoctoat oder Dimethylzinndicarboxylat ist.

13. Reaktionsgemisch nach einem der Ansprüche 6 bis 12, **dadurch gekennzeichnet, dass** die Verbindung d) ein Si-H funktionelles Polysiloxan ist.

14. Reaktionsgemisch nach einem der Ansprüche 6 bis 13, **dadurch gekennzeichnet, dass** der basische Katalysator e) eine Base ist aus der Gruppe bestehend aus Aminoverbindungen, Metallhydroxiden, Metallsalzen und anderen Lewis-Basen.

15. Reaktionsgemisch nach einem der Ansprüche 6 bis 14, **dadurch gekennzeichnet, dass** es mindestens einen Zusatzstoff enthält ausgewählt aus der Gruppe bestehend aus
f) Wasserstoffdonatoren,
g) Weichmachern,
h) Schaumstabilisatoren,
i) Füllstoffen,
j) sonstigen Zusatzmitteln wie Trockenmittel, Farbstoffe, Pigmente, Treibmittel und sonstige funktionelle Zusatzstoffe.

16. Reaktionsgemisch nach einem der Ansprüche 6 bis 15, **dadurch gekennzeichnet, dass** die Anteile der Komponenten in Gewichts-% sind:
20-95 % Polysiloxan a),
0,5 bis 20% Verbindung b),
0,05 bis 2% Metallkatalysator c),
0,1 bis 5 % Verbindung d),
0,05 bis 10% Katalysator e),
0 bis 80% Füllstoffe und
0 bis 50% sonstige Zusatzstoffe.

17. Reaktionsgemisch gemäß einem der Ansprüche 1 bis 16 in Form eines Zweikomponentensystems.

18. Zweikomponentensystem zur Herstellung von Silikonschaum, umfassend eine Komponente A, enthaltend
a) ein Polysiloxan mit mindestens zwei Si-OH Gruppen,
d) eine Verbindung mit mindestens einer Si-H Gruppe,
und eine Komponente B, enthaltend
b) eine Verbindung mit mindestens zwei Si-O-C Gruppen,
c) einen Metallkatalysator, ausgewählt aus der Gruppe bestehend aus Metallen und Organometallverbindungen.

19. Zweikomponentensystem nach Anspruch 18, **dadurch gekennzeichnet, dass** die Komponente B einen basischen Katalysator e) enthält, der eine zusätzliche Verbindung ist oder der identisch mit der Verbindung b) ist.

20. Verfahren zur Herstellung von Silikonschaum unter Verwendung eines Reaktionsgemischs nach einem der Ansprüche 6 bis 17 oder eines Zweikomponentensystems nach einem der Ansprüche 18 oder 19.

21. Verfahren nach Anspruch 20, **dadurch gekennzeichnet, dass** die Reaktion initiiert wird durch Mischen der Komponente A, enthaltend das Polysiloxan a) und die Verbindungen d), mit der Komponente B, enthaltend die Verbindung b) und den Metallkatalysator c).

22. Verfahren zum Verbinden oder zum Ausschäumen oder Beschäumen eines Gegenstandes mit einem Silikonschaum, wobei an der Oberfläche des Gegenstandes ein Silikonschaum gemäß einem Verfahren nach einem der Ansprüche 1 bis 5, 20 oder 21 hergestellt wird.

23. Silikonschaum oder Formkörper aus Silikonschaum, erhältlich nach einem Verfahren nach einem der Ansprüche 1 bis 5 oder 20 bis 22 oder durch Reaktion eines Reaktionsgemischs nach einem der Ansprüche 6 bis 19.

24. Mit Silikonschaum verbundener Gegenstand, erhältlich nach einem Verfahren gemäß Anspruch 22.

25. Mit Silikonschaum verbundener Gegenstand nach Anspruch 24 wobei dieser eine Gehäusenut oder ein Elektronikbauteil ist.

26. Verwendung eines Verfahrens nach einem der Ansprüche 1 bis 5 oder 20 bis 22, eines Reaktionsgemischs nach einem der Ansprüche 6 bis 17 oder eines Zweikomponentengemischs nach Anspruch 18 oder 19 zur Herstellung von Elektronikbauteilen, Leuchten oder Lampen und/oder zur Auftragung von Schaum auf Metalle.

## Claims

1. Process for producing silicone foam, using a reaction mixture in which hydrogen is released in a first reaction of compounds having at least one Si-H group in the presence of a basic catalyst, and the reaction mixture is cross-linked in a second reaction in the presence of a metal catalyst.

2. Process according to claim 1, **characterised in that** the second reaction is a condensation reaction.

3. Process according to either claim 1 or claim 2, **characterised in that** the first reaction and the second reaction take place substantially independently of one another.

4. Process according to any one of claims 1 to 3, **characterised in that** the second reaction takes place with a time delay after the first reaction.

5. Process according to any one of claims 1 to 4 **characterised in that** the second reaction takes place between a polysiloxane a) having at least two Si-OH groups and a compound b) having at least two Si-O-C groups.

6. Reaction mixture for preparing silicone foam, comprising
a) a polysiloxane having at least two Si-OH groups,
b) a compound having at least two Si-O-C groups,
c) a metal catalyst selected from the group consisting of metals, metal compounds and organometallic compounds,
d) a compound having at least one Si-H group,
e) a basic catalyst which either is identical to the compounds b) or is a separate catalyst.

7. Reaction mixture according to claim 6, **characterised in that** it releases hydrogen which brings about the foaming of the reaction mixture.

8. Reaction mixture according to either claim 6 or claim 7, **characterised in that** the polysiloxane a) is a polydialkylsiloxane.

9. Reaction mixture according to any one of claims 6 to 8, **characterised in that** the compound b) having the at least two Si-O-C groups has the formula RR'Si(-O-R¹)(-O-R²), RSi(-O-R¹)(-O-R²)(-O-R³) or Si(-O-R¹)(-O-R²)(-O-R³)(-O-R⁴), R¹, R², R³, R⁴, R and R' each being an organic radical.

10. Reaction mixture according to claim 9, **characterised in that** the organic R¹, R², R³, R⁴, R and R' radicals in the compound b) are selected from the group consisting of alkyl, substituted alkyl, aryl, alkaryl and araryl radicals.

11. Reaction mixture according to any one of claims 6 to 10, **characterised in that** the metal catalyst c) is an organotin compound.

12. Reaction mixture according to claim 11, **characterised in that** the organotin compound is dibutyltin dilaurate (DBTDL), tin octoate or dimethyltin dicarboxylate.

13. Reaction mixture according to any one of claims 6 to 12, **characterised in that** the compound d) is an Si-H-functional polysiloxane.

14. Reaction mixture according to any one of claims 6 to 13, **characterised in that** the basic catalyst e) is a base selected from the group consisting of amino compounds, metal hydroxides, metal salts and other Lewis bases.

15. Reaction mixture according to any one of claims 6 to 14, **characterised in that** the reaction mixture comprises at least one additive selected from the group consisting of:
f) hydrogen donors,
g) plasticisers,
h) foam stabilisers,
i) fillers, and
j) other additives, such as desiccants, dyes, pigments, blowing agents and other functional additives.

16. Reaction mixture according to any one of claims 6 to 15, **characterised in that** the proportions of the components in % by weight are:
20-95 % polysiloxane a),
0.5 to 20 % compound b),
0.05 to 2 % metal catalyst c),
0.1 to 5 % compound d),
0.05 to 10 % catalyst e),
0 to 80 % fillers and
0 to 50 % other additives.

17. Reaction mixture according to any one of claims 1 to 16 in the form of a two-component system.

18. Two-component system for producing silicone foam, comprising a component A, which comprises:
a) a polysiloxane having at least two Si-OH groups,
d) a compound having at least one Si-H group,
and a component B, which comprises:
b) a compound having at least two Si-O-C groups,
c) a metal catalyst selected from the group consisting of metals and organometallic compounds.

19. Two-component system according to claim 18, **characterised in that** the component B comprises a basic catalyst e) which is an additional compound or which is identical to the compound b).

20. Process for producing silicone foam using a reaction mixture according to any one of claims 6 to 17 or a two-component system according to either claim 18 or claim 19.

21. Process according to claim 20, **characterised in that** the reaction is initiated by mixing the component A, which comprises the polysiloxane a) and the compounds d), with the component B, which comprises the compound b) and the metal catalyst c).

22. Process for bonding or applying a silicone foam to an article or filling it with a silicone foam, wherein a silicone foam is produced on the surface of the article by a process according to any one of claims 1 to 5, 20 or 21.

23. Silicone foam or silicone foam shaped body, obtainable by a process according to any one of claims 1 to 5 or 20 to 22 or by reacting a reaction mixture according to any one of claims 6 to 19.

24. Article bonded to silicone foam, obtainable by a process according to claim 22.

25. Article bonded to silicone foam according to claim 24, wherein said article is a housing groove or an electronic component.

26. Use of a process according to any one of claims 1 to 5 or 20 to 22, of a reaction mixture according to any one of claims 6 to 17, or of a two-component mixture according to either claim 18 or claim 19 to produce electronic components, lights or lamps and/or for applying foam to metals.

## Revendications

1. Procédé pour fabriquer une mousse de silicone, dans lequel on utilise un mélange réactionnel, dans lequel il se libère, lors d'une première réaction de composés avec au moins un groupement de type Si-H en présence d'un catalyseur basique, de l'hydrogène et, dans une seconde réaction, le mélange réactionnel est réticulé en présence d'un catalyseur métallique.

2. Procédé selon la revendication 1, **caractérisé en ce que** la seconde réaction est une réaction de condensation.

3. Procédé selon la revendication 1 ou 2, **caractérisé en ce que** la première réaction et la seconde réaction se déroulent de manière sensiblement indépendante l'une de l'autre.

4. Procédé selon l'une quelconque des revendications 1 à 3, **caractérisé en ce que** la seconde réaction se déroule de manière décalée dans le temps après la première réaction.

5. Procédé selon l'une quelconque des revendications 1 à 4, **caractérisé en ce que** la seconde réaction se produit entre un polysiloxane a) ayant au moins deux groupements Si-OH et un composé b) ayant au moins deux groupements Si-O-C.

6. Mélange réactionnel pour la fabrication d'une mousse de silicone, contenant :
a) un polysiloxane ayant au moins deux groupements Si-OH,
b) un composé ayant au moins deux groupements Si-O-C,
c) un catalyseur métallique, choisi dans le groupe constitué de métaux, de composés métalliques et de composés organométalliques,
d) un composé ayant au moins un groupement Si-H,
e) un catalyseur basique, qui est identique au composé b) ou qui constitue un catalyseur distinct.

7. Mélange réactionnel selon la revendication 6, **caractérisé en ce que** celui-ci libère de l'hydrogène qui provoque la formation de mousse par le mélange réactionnel.

8. Mélange réactionnel selon la revendication 6 ou 7, **caractérisé en ce que** le polysiloxane a) est un polydialkylsiloxane.

9. Mélange réactionnel selon l'une quelconque des revendications 6 à 8, **caractérisé en ce que** le composé b) ayant les au moins deux groupements Si-O-C répond aux formules RR'Si(-O-R¹)(-O-R²) , RSi(-O-R¹)(-O-R²)(-O-R³) ou Si(-O-R¹)(-O-R²)(-O-R³)(-O-R⁴), dans lesquelles R¹, R², R³, R⁴, R et R' représentent un radical organique.

10. Mélange réactionnel selon la revendication 9, **caractérisé en ce que**, pour le composé b), les radicaux organiques R¹, R², R³, R⁴, R et R' sont choisis dans le groupe constitué de radicaux alkyle, alkyle substitué, aryle, alkaryle et araryle.

11. Mélange réactionnel selon l'une quelconque des revendications 6 à 10, **caractérisé en ce que** le catalyseur métallique c) est un composé organique à base d'étain.

12. Mélange réactionnel selon la revendication 11, **caractérisé en ce que** le composé organique à base d'étain est le dilaurate de dibutylétain (DBTDL), l'octoate d'étain ou le dicarboxylate de diméthylétain.

13. Mélange réactionnel selon l'une quelconque des revendications 6 à 12, **caractérisé en ce que** le composé d) est un polysiloxane à fonction Si-H.

14. Mélange réactionnel selon l'une quelconque des revendications 6 à 13, **caractérisé en ce que** le catalyseur basique e) est une base choisie dans le groupe constitué de composés d' amine, d' hydroxydes de métaux, de sels de métaux et d'autres bases de Lewis.

15. Mélange réactionnel selon l'une quelconque des revendications 6 à 14, **caractérisé en ce qu'**il contient au moins un additif choisi dans le groupe constitué des composés suivants :
f) donneurs d'hydrogène,
g) plastifiants,
h) stabilisants de mousse,
i) charges,
j) autres additifs, tels que des agents siccatifs, des colorants, des pigments, des agents moussants et d'autres additifs fonctionnels.

16. Mélange réactionnel selon l'une quelconque des revendications 6 à 15, **caractérisé en ce que** les proportions des composants en % en poids sont les suivantes :
20 à 95 % de polysiloxane a),
0,5 à 20 % de composé b),
0,05 à 2 % de catalyseur métallique c),
0,1 à 5 % de composé d),
0,05 à 10 % de catalyseur e),
0 à 80 % de charges, et
0 à 50 % d'autres additifs.

17. Mélange réactionnel selon l'une quelconque des revendications 1 à 16, sous la forme d'un système à deux composants.

18. Système à deux composants pour fabriquer une mousse de silicone, comprenant un composant A, contenant :
a) un polysiloxane ayant au moins deux groupements Si-OH,
d) un composé ayant au moins un groupement Si-H,
et un composant B, contenant :
b) un composé ayant au moins deux groupements Si-O-C,
c) un catalyseur métallique, choisi dans le groupe constitué des métaux et des composés organométalliques.

19. Système à deux composants selon la revendication 18, **caractérisé en ce que** le composant B contient un catalyseur basique e), qui est un composé supplémentaire ou qui est un composé identique au composé b).

20. Procédé pour fabriquer une mousse de silicone en utilisant un mélange réactionnel selon l'une quelconque des revendications 6 à 17 ou un système à deux composants selon l'une quelconque des revendications 18 ou 19.

21. Procédé selon la revendication 20, **caractérisé en ce que** la réaction est initiée en mélangeant le composant A, contenant le polysiloxane a) et les composés d), au composant B, contenant le composé b) et le catalyseur métallique c).

22. Procédé pour lier ou expanser ou revêtir un objet avec une mousse de silicone, dans lequel on produit à la surface de l'objet une mousse de silicone en utilisant un procédé selon l'une quelconque des revendications 1 à 5, 20 ou 21.

23. Mousse de silicone ou corps de moulage constitué de mousse de silicone, que l'on peut obtenir par un procédé selon l'une quelconque des revendications 1 à 5 ou 20 à 22 ou par réaction d'un mélange réactionnel selon l'une quelconque des revendications 6 à 19.

24. Objet lié à une mousse de silicone, que l'on peut obtenir par un procédé selon la revendication 22.

25. Objet lié à une mousse de silicone selon la revendication 24, dans lequel celui-ci est une rainure de boîtier ou un composant électronique.

26. Utilisation d'un procédé selon l'une quelconque des revendications 1 à 5 ou 20 à 22, d'un mélange réactionnel selon l'une quelconque des revendications 6 à 17 ou d'un système à deux composants selon la revendication 18 ou 19, pour fabriquer des composants électroniques, des appareils d'éclairage ou des lampes et/ou pour appliquer de la mousse sur des métaux.
